## Europäisches Patentamt
## European Patent Office
## Office européen des brevets

(19)

(11) Veröffentlichungsnummer : **0 036 478**
**B1**

(12) EUROPÄISCHE PATENTSCHRIFT

(45) Veröffentlichungstag der Patentschrift :
11.04.84

(21) Anmeldenummer : 81100749.1

(22) Anmeldetag : 03.02.81

(51) Int. Cl.³ : **F 41 C 29/00**, B 60 R 11/00

(54) Gewehrständer für Jagdwagen.

(30) Priorität : 18.03.80 DE 8007331 U

(43) Veröffentlichungstag der Anmeldung :
30.09.81 Patentblatt 81/39

(45) Bekanntmachung des Hinweises auf die Patenterteilung : 11.04.84 Patentblatt 84/15

(84) Benannte Vertragsstaaten :
AT CH DE FR IT LI

(56) Entgegenhaltungen :
DE-A- 2 846 180
US-A- 2 287 805
US-A- 2 593 402
US-A- 3 556 363
Die Akte enthält technische Angaben, die nach dem
Eingang der Anmeldung eingereicht wurden und die
nicht in dieser Patentschrift enthalten sind.

(73) Patentinhaber : Dräbing, Walter
Am Schnepfenbusch 1
D-3501 Niestetal (DE)

(72) Erfinder : Dräbing, Walter
Am Schnepfenbusch 1
D-3501 Niestetal (DE)

(74) Vertreter : Patentanwälte Dipl.-Ing. Rudolf Bibrach
Dipl.-Ing. Elmar Rehberg
Pütterweg 6 Postfach 738
D-3400 Göttingen (DE)

EP 0 036 478 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Gewehrständer für Jagdwagen

Die Erfindung bezieht sich auf einen Gewehrständer für Jagdwagen, mit einem eine Durchbrechung aufweisenden Tragrahmen mit Seitenwangen, Fußteil und Kopfteil, wobei am Fußteil Vertiefungen zur Aufnahme je eines Gewehrschaftes und an der Vorderseite des Kopfteils Abstützkörper zur Aufnahme je eines Gewehrlaufes vorgesehen sind, an denen die Gewehre stehend und dabei die Durchbrechung durchsetzend gehalten sind.

Bei Jagdwagen entsteht das Problem für den Jäger, das oder die Gewehre mitzuführen, wobei die Gewehre einerseits vor Beschädigungen, Verkratzungen o. dgl. geschützt untergebracht sein müssen und andererseits im Bedarfsfalle schnell schußbereit zur Verfügung stehen sollen. Durch die Erschütterungen, die ein Jagdwagen im Gelände erfährt, ist es nicht einfach, die Gewehre ortsfest unterzubringen.

Die US-A-2 593 402 zeigt einen Gewehrständer der angegebenen Art, der jedoch für eine ortsfeste und vor allen Dingen verschlußsichere Aufstellung bestimmt ist. Der Tragrahmen ist etwa dreieckförmig aufgebaut und von jeder Seite ist eine Reihe Gewehre eingestellt, wobei die beiden Reihen einander nicht durchdringen. Die Gewehre stehen mit dem Gewehrschaft in je einer Vertiefung und liegen am Kopfteil mit der Oberseite des Laufes an. Etwa im Bereich der Gewehrmitte sind die Gewehre beidseitig abgestützt, wobei eine verschwenkbare Verriegelungsstange dazu dient, daß die Gewehre nicht unbefugt aus dem Gewehrständer entnommen werden können. Mit diesen Merkmalen läßt sich ein Gewehrständer für Jagdwagen nicht aufbauen, weil die Entnahme der Gewehre nicht schnell genug durchgeführt werden kann und im übrigen die Gewehre in der aufgestellten Stellung auch sehr viel Platz benötigen, der auf einem Jagdwagen in der Regel nicht vorhanden ist.

Bekannt sind sogenannte Auto-Gewehrhalter, die meist zwei- oder mehrteilig ausgebildet sind und aus einem Halterungsteil, welches mit Vertiefungen zur Aufnahme des Gewehrschaftes versehen ist und aus einem weiteren Halterungsteil, der einen Abstützkörper zur Aufnahme eines Gewehrschaftes bildet, bestehen. Diese beiden Teile werden am Jagdwagen relativ zueinander befestigt, meist im Bereich der Rückseite der Vordersitze, oder an der Vorderseite der Rücksitze. Der am Boden des Jagdwagens angeordnete Halterungsteil ist mit verstellbaren Bügeln ausgestattet, die den Schaft federnd umfassen und halten. Diese Halterungsteile sind infolge ihrer ortsfesten Montage am Boden des Fahrzeuges sehr störend, zumal nur ganz bestimmte Stellen am Boden geeignet sind, weil es einen zweiten Platz zu finden gilt, an welchem der entsprechende Abstützkörper befestigt werden kann. Dabei ist es weiterhin nachteilig, daß die derart befestigte Waffe das Aus- und Einsteigen in den Jagdwagen behindert.

Andererseits sind Gewehrständer, meist aus Holz, in rahmenartiger Konstruktion bekannt, die zur Aufbewahrung von meist mehreren Gewehren in ortsfesten Räumen, also beispielsweise im Jagdhaus oder dergleichen dienen. Diese Gewehrständer besitzen zwei Seitenwangen, ein Fußteil, in welchem Vertiefungen zur Schaftaufnahme vorgesehen sind und einen Kopf, an welchem Abstützkörper angeordnet und ausgebildet sein können. Derartige rahmenartige Gewehrständer werden jedoch immer so ausgebildet und benutzt, daß sie beispielsweise an einer Raumwand aufgestellt oder an einer solchen aufgehängt werden. Die Vertiefungen zur Aufnahme des Gewehrschaftes und die Abstützkörper zur Aufnahme je eines Gewehrlaufes befinden sich dabei immer auf der gleichen Seite des Tragrahmens, so daß die Gewehre nebeneinander gleichgeordnet aufgestellt werden. Hierdurch ergibt sich ein gewisser Mindestabstand zwischen den Gewehren, den es einzuhalten gilt, wenn das einzelne Gewehr noch mühelos und ohne Beschädigung aus dem Gewehrständer entnommen werden soll. Im Jagdwagen steht meist nur ein relativ kleiner Platz zur Verfügung, so daß es hier erforderlich wird, insbesondere bei Unterbringung von drei oder vier Gewehren, die Gewehre näher aneinander heranzurücken und trotzdem eine leichte, einfache und gefahrlose Entnahme eines einzelnen Gewehres aus dem Gewehrständer zu ermöglichen.

Der Erfindung liegt daher die Aufgabe zugrunde, einen Gewehrständer für Jagdwagen der eingangs beschriebenen Art derart weiterzubilden, daß er bei den beengten Platzverhältnissen für mehrere Gewehre geschickt untergebracht werden kann, wobei mehrere Gewehre sicher aufgenommen werden müssen und leicht und schnell aus dem Gewehrständer bei Bedarf entnommen werden können, ohne daß der Ein- und Ausstieg in den Jagdwagen behindert wird.

Erfindungsgemäß wird dies dadurch erreicht, daß auch auf der Rückseite des Kopfteils mindestens ein zu den Abstützkörpen auf der Vorderseite versetzter Abstützkörper vorgesehen ist, daß sämtlichen Abstützkörpern je ein Spannband mit Haken und Öse zugeordnet ist, daß die Vertiefungen für sämtliche Gewehrschäfte nebeneinander sowie unterschiedlich geneigt angeordnet sind, so daß die Gewehre von der Vorder- und von der Rückseite des Tragrahmens in die Vertiefungen eingestellt gehalten sind, und daß der Tragrahmen Befestigungsmittel für seine Anbringung über dem Kardantunnel des Jagdwagens aufweist. Durch die Anbringung über dem Kardantunnel behindert der Gewehrständer den Aus- und Einstieg in den Jagdwagen nicht. Die Gewehre sind bei kleinem Platzbedarf in dem Gewehrständer sicher gehalten und können auch dann nicht umfallen, wenn bei Fahrten durch das Revier entsprechende Stöße auf den Jagdwagen einwirken. Andererseits ist die schnelle und einfache Entnahme eines oder mehrerer Gewehre aus dem Gewehrständer möglich, weil die einzelnen Gewehre im Bereich des Schaftes nur lose in den Vertiefungen im Fußteil aufgenommen sind, also eine Einspannung im Mittelbereich des Gewehres fehlt. Die Spannbänder im Bereich der Abstützkörper lassen sich schnell und einfach lösen. Die Gewehre sind damit auch unmittelbar in Griffweite mehrerer, in dem Jagdwagen sitzender Jäger aufbewahrt. Auch die Ausrüstung der Gewehre mit Zusatzinstrumenten, wie beispielsweise Zielfernrohren, die in der in den Gewehrständer eingestellten Stellung aufgesetzt bleiben, stört die Handhabung der Gewehre nicht.

Um die Gewehre besonders eng in dem Gewehrständer anordnen zu können, kann der oder die Abstützkörper auf der Rückseite des Kopfteils gegenüber den Abstützkörpern auf der Vorderseite des Kopfteils auf Luke angeordnet sein.

Damit der Gewehrständer im Bereich des Kardantunnels ordnungsgemäß und leicht befestigt werden kann, kann der Tragrahmen als Befestigungsmittel mit einer horizontal angeordneten Befestigungsstange versehen sein, die das Anschrauben des Gewehrständers an der Rückseite der unter den Vordersitzen befindlichen Staukästen ermöglicht. Dabei kann die Anordnung so getroffen sein, daß nur diese eine Befestigung erforderlich ist, so daß der Boden des Jagdwagens in keiner Weise angebohrt oder mit zusätzlichen Befestigungseinrichtungen versehen werden muß.

Durch die Aufstellung der Gewehre in der beschriebenen Weise ist es weiterhin möglich, die Seitenwangen des Tragrahmens relativ breit und kräftig auszubilden, so daß ein sicherer Stand des Gewehrständers und ein stabiler Halt der Gewehre selbst im Jagdwagen erreicht werden. Der Tragrahmen kann insbesondere aus glasfaserverstärktem Kunststoff bestehen. Damit ist es möglich, dem Gewehrständer auch ein gefälliges Aussehen zu geben, welches an die übrige Inneneinrichtung des Jagdwagens angepaßt ist.

Die Erfindung wird anhand eines Ausführungsbeispieles weiter beschrieben. Es zeigen :

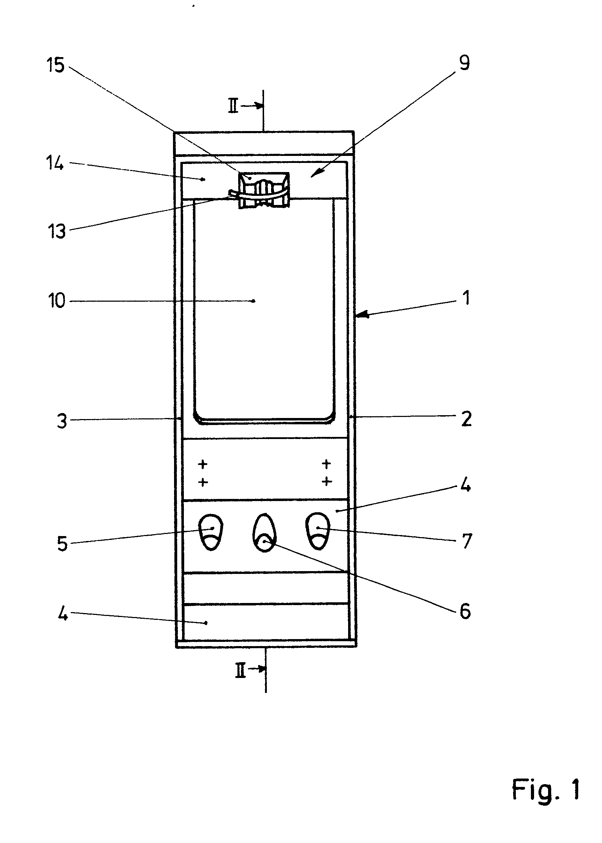

Figur 1 eine Rückansicht des Gewehrständers,

Figur 2 einen Schnitt gemäß der Linie II-II durch den Gewehrständer mit zwei eingesetzten Gewehren und

Figur 3 eine Draufsicht auf den Kopf des Gewehrständers.

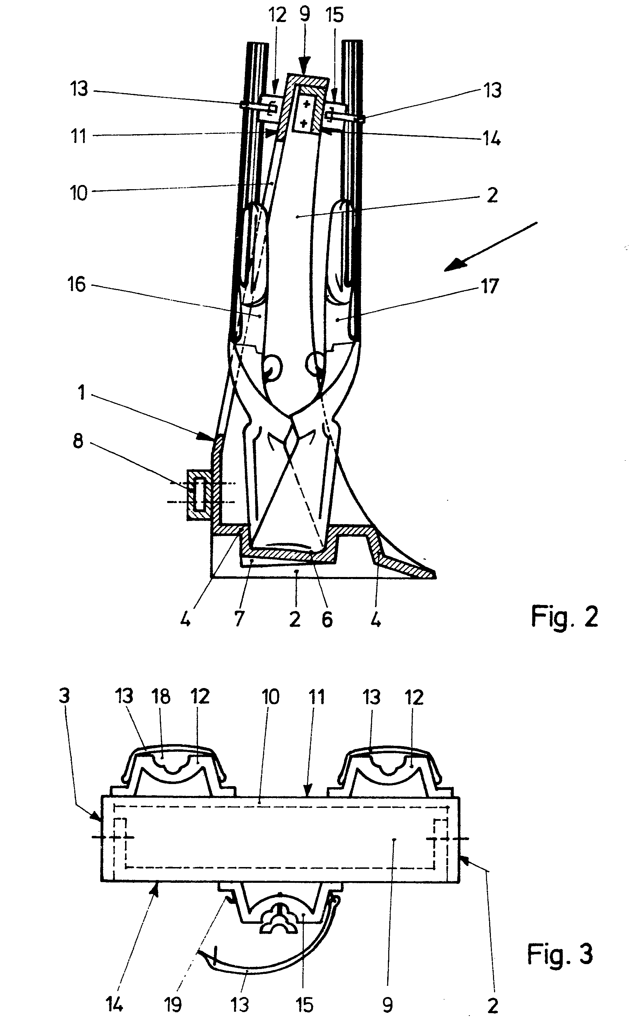

Der Gewehrständer besteht im wesentlichen aus einem Tragrahmen 1 aus glasfaserverstärktem Kunststoff, der als in sich steifer Rahmen ausgebildet ist. Im einzelnen besitzt der Tragrahmen 1 zwei Seitenwangen 2, 3, die die aus Fig. 2 ersichtliche geschwungene Formgebung aufweisen. Unten sind die beiden Seitenwangen 2 und 3 durch das Fußteil 4 miteinander verbunden, in welchem Vertiefungen 5, 6, 7 zur Aufnahme des Schaftes je eines Gewehres vorgesehen sind. Die beiden Seitenwangen 2 und 3 erstrecken sich rechts und links des Fußteils 4 bis nach unten, so daß der Gewehrständer auf drei Seiten rückwärtig geschlossen ausgebildet ist, während er an seiner Vorderseite offen sein kann. Über diesem offenen Bereich ist eine Befestigungsstange 8 aus einem Metallprofil vorgesehen, welches zur Befestigung des Gewehrständers an der Rückwand der Stausokkel, die unter den Vordersitzen des Jagdwagens angeordnet sind, dienen.

Oben sind die beiden Seitenwangen 2 und 3 durch ein Kopfteil 9 miteinander verbunden, so daß auf diese Weise eine große Durchbrechung 10 von dem Kopfteil 9, den beiden Seitenwangen 2 und 3 und dem Fußteil 4 eingeschlossen wird. An der Vorderseite 11 des Kopfteiles 9 sind zwei Abstützkörper 12 mit je einem Spannband 13 im Abstand der Vertiefungen 5 und 7 voneinander vorgesehen und diesen Vertiefungen 5 und 7 zugeordnet. Auf der Rückseite 14 befindet sich ebenfalls ein Abstützkörper 15, mit Spannband 13, der der mittleren Vertiefung 6 zugeordnet ist. Damit ergibt sich die Möglichkeit, zwei Gewehre von vorne durch die Durchbrechung 10 hindurch in die Vertiefungen 5 und 7 einzustellen und die Läufe an den Abstützkörpen 12 zu befestigen. In Fig. 2 ist das Gewehr 16 zu sehen, welches in die Vertiefung 7 eingestellt ist. Von der Rückseite her kann ein drittes Gewehr 17 in die Vertiefung 6 eingestellt und an dem Abstützkörper 15 fixiert werden. Das in die Vertiefung 5 eingestellte Gewehr nimmt die gleiche Position ein wie das Gewehr 16 in Fig. 2, so daß auf diese Weise die Gewehre 16 und 17 gegeneinander auf Luke angeordnet sind, und zwar derart, daß mit Ausnahme eines kleinen Schaftbereiches die beiden von vorn eingestellten Gewehre 16 im Abstand der Vertiefungen 5 und 7 voneinander angeordnet sind, während das von hinten eingestellte Gewehr 17 gleichsam parallel zu sich selbst keinen Nachbarn besitzt, so daß es ebenfalls mühelos ergriffen und aus dem Ständer bei Bedarf auch schnell entnommen werden kann. In den Abstützkörpern 12 und 15 sind an sich bekannte Vertiefungen zur Aufnahme des Laufes eines Drillings vorgesehen, die durch Einsatz eines Füllkörpers 18 so verkleinert werden können, daß auch ein einläufiges Gewehr einen festen und sicheren Halt findet, wenn das betreffende Spannband 13 am Haken 19 fixiert ist.

Es versteht sich, daß die Aufteilung auch so getroffen werden kann, daß mehr als drei Gewehre in dem Ständer eingestellt werden können.

## Ansprüche

1. Gewehrständer für Jagdwagen, mit einem eine Durchbrechung (10) aufweisenden Tragrahmen (1) mit Seitenwangen, Fußteil (4) und Kopfteil (9), wobei am Fußteil Vertiefungen zur Aufnahme je eines Gewehrschaftes und an der Vorderseite des Kopfteils Abstützkörper (12) zur Aufnahme je eines Gewehrlaufes vorgesehen sind, an denen die Gewehre stehend und dabei die Durchbrechung durchsetzend gehalten sind, dadurch gekennzeichnet, daß auch auf der Rückseite (14) des Kopfteils (9) mindestens ein zu den Abstützkörpern (12) auf der Vorderseite versetzter Abstützkörper (15) vorgesehen ist, daß sämtlichen Abstützkörpern (12, 15) je ein Spannband mit Haken und Öse zugeordnet ist, daß die Vertiefungen (5, 6, 7) für sämtliche Gewehrschäfte nebeneinander sowie unterschiedlich geneigt angeordnet sind, so daß die Gewehre von der Vorder- und von der Rückseite des Tragrahmens (1) in die Vertiefungen eingestellt gehalten sind, und daß der Tragrahmen Befestigungsmittel für seine Anbringung über dem Kardantunnel des Jagdwagens aufweist.

2. Gewehrständer nach Anspruch 1, dadurch gekennzeichnet, daß der Tragrahmen (1) als Befestigungsmittel mit einer horizontal angeordneten Befestigungsstange (8) versehen ist.

3. Gewehrständer nach Anspruch 1, dadurch gekennzeichnet, daß der Tragrahmen (1) aus glasfaserverstärktem Kunststoff besteht.

## Claims

1. Gun stand for hunting vehicles, with a supporting frame (1) having a perforation (10), with side cheeks, a base part (4) and a head part (9), there being on the base part recesses for receiving one gunstock each and, on the front side of the head part, support bodies (12) for receiving one gun barrel each, against which the guns are held upright and at the same time passing through the perforation, characterised in that also on the rear side (14) of the head part (9) there is at least one support body (15) offset in relation to the support bodies (12) on the front side, in that a strap with a hook and an eyelet is assigned to each of the support bodies (12, 15), in that the recesses (5, 6, 7) for all the gunstocks are arranged next to one another and with different inclinations, so that the guns are held adjusted in the recesses from the front side and the rear side of the supporting frame (1), and in that the supporting frame has fastening means for attaching it above the transmission tunnel of the hunting vehicle.

2. Gun stand according to Claim 1, characterised in that the supporting frame (1) is provided as a fastening means with a fastening rod (8) arranged horizontally.

3. Gun stand according to Claim 1, characterised in that the supporting frame (1) consists of glass fibre-reinforced plastic.

## Revendications

1. Ratelier à fusils pour voiture de chasseurs, avec un châssis porteur (1) à ouverture centrale (10), comportant des parois latérales (2, 3), une embase (4) et une pièce de dessus (9), cependant que, sur l'embase, il est prévu des creux pour recevoir chacun une monture de fusil et que, sur le devant de la pièce de dessus, il est prévu des corps d'appui (12) pour recevoir chacun le canon d'un fusil, les fusils étant maintenus debout contre les corps d'appui et pénétrant ainsi dans l'ouverture centrale, caractérisé en ce qu'à l'arrière (14) de la pièce de dessus (9), il est prévu au moins un corps d'appui (15) décalé par rapport aux corps d'appui (12) situés sur le devant, qu'à tous ces corps d'appui (12, 15) correspond chaque fois une bande de serrage avec crochet et œillet, que les creux (5, 6, 7) pour toutes les montures de fusils sont les uns à côté des autres et différemment penchés, de sorte que les fusils sont maintenus dans ces creux de l'avant et de l'arrière du châssis porteur (1) et que ce dernier présente des moyens de fixations pour son installation au-dessus du tunnel de l'arbre à cardan d'une voiture de chasseurs.

2. Ratelier à fusils suivant la revendication 1, caractérisé en ce que le châssis porteur (1) est en tant que moyen de fixation, muni d'une barre horizontale de fixation (8).

3. Ratelier à fusils suivant la revendication 1, caractérisé en ce que le châssis porteur (1) est en matière plastique renforcée par des fibres de verre.

Fig. 1

Fig. 2

Fig. 3